# EUROPÄISCHE PATENTANMELDUNG

(11) **EP 0 694 504 A1**
(43) Veröffentlichungstag der Anmeldung: **31.01.1996**
(21) Anmeldenummer: 95111911.4
(22) Anmeldetag: 28.07.1995
(51) Int. Cl.: C02F 9/00, C02F 3/06, B01D 29/68

(54) **Vorrichtung zum Reinigen von Abwässern**

(30) Priorität: 28.07.1994 DE 9412202 U
(71) Anmelder: K.D. Mecklenburg GmbH, D-48155 Münster (DE)
(72) Erfinder: Mecklenburg, Klaus-Dietmar, D-48153 Münster (DE)
(74) Vertreter: Habbel, Hans-Georg, Dipl.-Ing.

(57) **Zusammenfassung**

Die Erfindung bezieht sich auf eine Vorrichtung zum Reinigen von Abwässern, insbesondere von Autowaschanlagen, mit einem Bioreaktor (1), der ein Filterfestbett (5) mit Biomasse umfaßt und der einen Zulauf (7) für zu reinigendes Wasser umfaßt sowie einen Ablauf (9) für gereinigtes Wasser, wobei der Zulauf einer mechanischen Filtereinrichtung (21) nachgeschaltet ist, und wobei der Ablauf unterhalb des Wasserspiegels des Bioreaktors angeordnet ist, wobei der Zulauf (7) vor einer Prallwand (6) mündet, und daß ein zweiter Ablauf (12) in Höhe der Wasserlinie im Bioreaktor (1) angeordnet ist.

## Beschreibung

Die Erfindung betrifft eine Vorrichtung nach dem Oberbegriff des Anspruchs 1.

Derartige Vorrichtungen sind beispielsweise aus der DE 93 10 027 U1 bekannt. Derartige Anlagen haben sich in der Praxis bewährt und arbeiten zufriedenstellend.

Der Erfindung liegt die Aufgabe zugrunde, die Reinigungsleistung gattungsgemäßer Vorrichtungen zu verbessern.

Diese Aufgabe wird erfindungsgemäß entsprechend dem kennzeichnenden Teil des Anspruchs 1 gelöst.

Die Erfindung schlägt mit anderen Worten vor, das mechanisch vorgereinigte Wasser nicht unmittelbar dem Biofilter in Form eines Festbettfilters zuzuführen, sondern zunächst dieses vorgereinigte Wasser gegen eine Prallwand zu spritzen, von der aus das Wasser in das Filterfestbett mit der Biomasse gelangt. Durch diese zusätzliche mechanische Vorbehandlung des Wassers wird eine besonders effektive Reinigung innerhalb des Filterfestbetts ermöglicht.

Eine zusätzliche Maßnahme gemäß der Erfindung besteht darin, daß der Bioreaktor einen zweiten Wasserablauf aufweist, der in Höhe des Wasserspiegels innerhalb des Bioreaktors vorgesehen ist. Bei gattungsgemäßen Vorrichtungen gelangt das Wasser durch einen Reaktoreinsatz mit dem Filterfestbett und der Biomasse nach unten, und der Abzug des gereinigten Wassers erfolgt unterhalb des Wasserspiegels. An der Wasseroberfläche schwimmen üblicherweise leichte Verunreinigungen auf.

Durch die zweite neuerungsgemäße Maßnahme wird mit Hilfe des zweiten Ablaufs eine Strömung an der Wasseroberfläche bewirkt, die diese aufgeschwommenen Verunreinigungen durch den zweiten Ablauf abführt, so daß dieses teilverschmutzte Wasser entweder der gesamten Reinigungsprozedur erneut zugeführt werden kann oder für besondere Einsatzzwecke abgezweigt werden kann.

Weitere vorteilhafte Ausgestaltungen der Erfindung sind den Unteransprüchen entnehmbar.

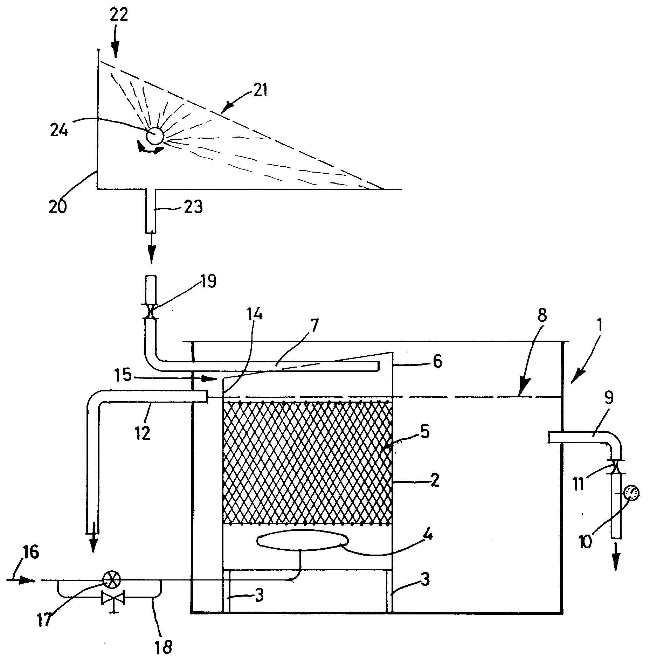

Ein Ausführungsbeispiel der Erfindung wird anhand der Zeichnung im folgenden näher erläutert. Dabei zeigt die Zeichnung schematisch vereinfacht einige Komponenten einer neuerungsgemäßen Reinigungsvorrichtung.

Mit 1 ist allgemein ein Bioreaktor bezeichnet, der wannenartig oder beckenartig ausgebildet ist und der einen Reaktoreinsatz 2 aufweist. Der Reaktoreinsatz 2 weist in seinem unteren Bereich Stützen 3 auf, mit denen er auf dem Boden des Bioreaktors 1 aufsteht.

Darüber weist der Reaktoreinsatz 2 einen Belüftungsteller 4 auf, von dem aus Luft oder Sauerstoff nach oben aufsteigen kann. Dabei durchquert die aufsteigende Luft ein Filterfestbett 5, in dem sowohl ein Trägermaterial als auch die eigentliche Biomasse zur Reinigung des Wassers vorliegt.

Die Wandung des Reaktoreinsatzes 2 kann wasserundurchlässig ausgebildet sein, so daß lediglich ein Durchströmen in vertikaler Richtung möglich ist.

Im oberen Bereich ist der Reaktoreinsatz 2 über die Oberkante des Filterfestbetts 5 hinaus hochgezogen, wobei die Rückseite des Reaktoreinsatzes 2 eine Prallwand 6 ausbildet. Gegen diese Prallwand 6 wird Wasser aus einem Rohr 7 gespritzt, welches den Zulauf für den Bioreaktor 1 darstellt.

Die Wasserlinie, die sich üblicherweise in dem Bioreaktor 1 einstellt, ist bei 8 gestrichelt angedeutet. Mit 9 ist ein Ablaufrohr gekennzeichnet, durch welches das gereinigte Wasser aus dem Bioreaktor 1 abgezogen werden kann. Dabei ist im Ablaufrohr 9 eine Meßvorrichtung 10 und ein Ventil 11 vorgesehen, so daß über die abfließende Wassermenge die Höhe der Wasserlinie 8 einstellbar ist. Ggf. kann anstelle der Meßvorrichtung 10 auch eine Meßvorrichtung im Bioreaktor zur unmittelbaren Erfassung des Standes der Wasserlinie vorgesehen sein.

Ein zweiter Ablauf 12 ist bei der gegenüberliegenden Seite des Bioreaktors 1 vorgesehen, und zwar nahe der Vorderseite des Reaktoreinsatzes 2. Dieser zweite Ablauf ist in Höhe der Wasserlinie 8 angeordnet, so daß im Bioreaktor 1 aufschwimmende Verunreinigungen als Flotat mit dem zweiten Ablauf 2 aus dem Bioreaktor 1 abgezogen werden können.

Der Reaktoreinsatz 2 ist in seinem oberen Bereich so ausgebildet, daß die Prallwand 6 höher ist als die Vorderseite 14 des Reaktoreinsatzes 2, so daß diese Vorderseite 14 mit ihrem oberen Ende eine Überlaufkante 15 bildet für das Wasser, welches nicht durch das Festbett des Reaktoreinsatzes 2 absinkt und demzufolge ungefiltert und lediglich mechanisch vorgereinigt in den Wasservorrat des Bioreaktors 1 gerät.

Die Nähe von der Überlaufkante 15 zum zweiten Ablauf 12 bewirkt, daß ein Großteil dieses lediglich vorgereinigten Wassers zusammen mit dem Flotat über den zweiten Ablauf abgezogen wird. Dieses Wasser des zweiten Ablaufes 12 kann entweder dem gesamten Reinigungsprozeß erneut zugeführt werden. Es kann alternativ dazu bei bestimmten Anwendungsfällen ggf. einer besonderen Verwendung zugeführt werden, beispielsweise der Grobreinigung oder Vorreinigung von Fahrzeugen, während die endgültige Reinigung der Fahrzeuge mit vollständig aufbereitetem Wasser durchgeführt wird, welches über den Ablauf 9 dem Bioreaktor 1 entnommen wird.

Die Reinigung des Filterfestbetts 5 kann in an sich bekannter Weise dadurch erfolgen, daß ein Druckluftrohr 16, welches für den normalen Belüftungsbetrieb die Druckluft mittels eines Druckminderers 17 dem Belüftungsteller 4 zuführt, zusätzlich eine Umgehung 18 des Druckminderers 17 aufweist, so daß mit vollem Druck eine Luftspülung des Filterfestbettes 5 erfolgen kann.

Der Stand der Wasserlinie 8 kann außer durch die Mengenregelung im Ablauf 9 auch durch eine Regelung der Zuflußmenge eingestellt werden, wenn mit Zulaufrohr 7 eine entsprechende Ventileinrichtung 19 vorgesehen ist.

In der Zeichnung ist weiterhin schematisch die mechanische Vorreinigung angedeutet, bei der in einem mit 20 nur teilweise angedeuteten Behälter ein mit 21 angedeutetes Sieb vorgesehen ist. Das verunreinigte Wasser wird, wie bei dem Pfeil 22 angedeutet, von oben auf das Sieb 21 aufgegeben, wobei grobe Verunreinigungen auf dem Sieb 21 zurückgehalten werden, während das Wasser durch das Sieb 21 gelangen kann, unten im Behälter 20 gesammelt wird und über eine Rohrleitung 23 mit dem Zulaufrohr 7 verbunden ist.

Die Verunreinigungen auf dem Sieb 21 behindern nach einer gewissen Betriebsdauer die Wirkungsweise dieser mechanischen Vorreinigung. Im Stand der Technik ist vorgesehen, das Sieb 21 beispielsweise durch einen Rüttelmotor von diesen Verunreinigungen zu befreien, so daß die Verunreinigungen vom Sieb 21 gelockert werden und auf dem Sieb 21 nach unten rutschen oder fließen können.

Vorteilhaft kann anstelle dieser lärmintensiven Reinigung das Sieb 21 von unten rückgespült werden. Zu diesem Zweck ist in der Zeichnung schematisch eine Sprühdüse 24 angedeutet, die mit entsprechendem Wasserdruck von unten gegen das Sieb 21 sprüht, so daß sich auf der Oberseite des Siebes 21 ein Wasserfilm bildet, auf dem die Verunreinigungen nach unten abschwimmen können. Das von unten angespritzte Wasser bewirkt zudem eine mechanische Lockerung der Rückstände auf dem Sieb 21, so daß eine zufriedenstellende Reinigung des Siebes 21 möglich ist.

Anstelle der rein schematisch angedeuteten Einzelsprühdüse 24 können mehrere Sprühdüsen unterhalb des Siebes 21 angeordnet sein. Dabei können die Sprühdüsen aufgrund ihrer Düsenanordnung einen festen Bereich des Siebes 21 bestreichen. Alternativ dazu kann die eine vorgesehene Sprühdüse 24 oder die Mehrzahl von Sprühdüsen schwenkbar gelagert sein, um einen dementsprechend größeren Bereich des Siebes 21 abdecken zu können. Da eine derartige Rückspülung des Siebes 21 gegenüber einem mechanischen Rütteln des Siebes 21 erheblich leiser und materialschonender ist, kann dieses Rückspülen entsprechend häufiger erfolgen, so daß insgesamt das Sieb 21 sauberer gehalten werden kann und dementsprechend auch die Reinigungsleistung der gesamten Vorrichtung verbessert wird.

## Patentansprüche

1. Vorrichtung zum Reinigen von Abwässern, insbesondere von Autowaschanlagen, mit einem Bioreaktor, der ein Filterfestbett mit Biomasse umfaßt und der einen Zulauf für zu reinigendes Wasser umfaßt sowie einen Ablauf für gereinigtes Wasser, wobei der Zulauf einer mechanischen Filtereinrichtung nachgeschaltet ist, und wobei der Ablauf unterhalb des Wasserspiegels des Bioreaktors angeordnet ist, dadurch gekennzeichnet, daß der Zulauf (Rohr 7) vor einer Prallwand (6) mündet, und daß ein zweiter Ablauf (12) in Höhe der Wasserlinie (8) im Bioreaktor (1) angeordnet ist.

2. Vorrichtung nach Anspruch 1, dadurch gekennzeichnet, daß die Prallwand (6) durch die Rückseite einer Behälterwandung gebildet ist, wobei die Vorderseite (14) der Wandung niedriger als die Rückseite ist und eine Überlaufkante (15) ausbildet, die dem zweiten Ablauf (12) benachbart ist.

3. Vorrichtung nach Anspruch 1 oder 2, dadurch gekennzeichnet, daß das Filterfestbett (5) mit der Biomasse innerhalb eines Reaktoreinsatzes (2) im Bioreaktor (1) angeordnet ist, wobei der Reaktoreinsatz (2) nach oben und unten flüssigkeitsdurchlässig ist, und wobei die Wandung des Reaktoreinsatzes (2) oberhalb des Filterfestbetts (5) die Prallwand (6) ausbildet.

4. Vorrichtung nach einem der vorhergehenden Ansprüche, dadurch gekennzeichnet, daß der Reaktoreinsatz (2) in seinem unteren Bereich Stützen (3) aufweist, die Zwischenräume aufweisen für einen Austritt von Wasser, welches aus dem Filterfestbett (5) gelangt und den Reaktoreinsatz (2) verläßt.

5. Vorrichtung nach einem der vorhergehenden Ansprüche, gekennzeichnet durch eine oder mehrere Wasserdüsen (Sprühdüse 24) zum Rückspülen des mechanischen Filters (Sieb 21), die auf der sauberen Seite des Filters (Sieb 21) angeordnet und gegen die Filterfläche gerichtet sind.

6. Vorrichtung nach Anspruch 5, dadurch gekennzeichnet, daß die Wasserdüsen (Sprühdüse 24) zum Bestreichen einer größeren Filterfläche schwenkbar gelagert sind.
